(19) **Europäisches Patentamt / European Patent Office / Office européen des brevets**

(11) **EP 2 903 718 B1**

(12) **FASCICULE DE BREVET EUROPEEN**

(45) Date de publication et mention
de la délivrance du brevet:
**07.08.2019 Bulletin 2019/32**

(51) Int Cl.:
***B01D 53/14*** *(2006.01)*

(21) Numéro de dépôt: **13774747.3**

(22) Date de dépôt: **12.09.2013**

(86) Numéro de dépôt international:
**PCT/FR2013/052100**

(87) Numéro de publication internationale:
**WO 2014/053720 (10.04.2014 Gazette 2014/15)**

(54) **PROCEDE D'ABSORPTION SELECTIVE DU SULFURE D'HYDROGENE D'UN EFFLUENT GAZEUX COMPRENANT DU DIOXYDE DE CARBONE PAR UNE SOLUTION ABSORBANTE A BASE D'AMINES COMPRENANT UN AGENT VISCOSIFIANT**

VERFAHREN ZUR SELEKTIVEN ABSORPTION VON SCHWEFELWASSERSTOFF AUS EINEM KOHLENDIOXID ENTHALTENDEN GASSTROM MITTELS EINER AMINABSORPTIONSLÖSUNG MIT EINEM VERDICKUNGSMITTEL

METHOD FOR THE SELECTIVE ABSORPTION OF HYDROGEN SULPHIDE FROM A GASEOUS EFFLUENT COMPRISING CARBON DIOXIDE BY AN AMINE ABSORBENT SOLUTION COMPRISING A VISCOSIFYING AGENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.10.2012 FR 1202680**

(43) Date de publication de la demande:
**12.08.2015 Bulletin 2015/33**

(73) Titulaire: **IFP Energies nouvelles
92500 Rueil-Malmaison (FR)**

(72) Inventeurs:
- **GRANDJEAN, Julien**
  **F-69008 Lyon (FR)**
- **GIRAUDON, Laetitia**
  **F-42410 Saint Michel Sur Rhone (FR)**
- **DELFORT, Bruno**
  **F-75005 Paris (FR)**
- **DALMAZZONE, Christine**
  **F-78220 Viroflay (FR)**
- **MOURET-HENRIQUES, Aurelie**
  **F-95240 Cormeilles En Parisis (FR)**
- **GONNARD, Sebastien**
  **F-69290 Grezieu La Varenne (FR)**

(74) Mandataire: **IFP Energies nouvelles
Département Propriété Industrielle
Rond Point de l'échangeur de Solaize
BP3
69360 Solaize (FR)**

(56) Documents cités:
CN-A- 102 580 473          DE-A1-102005 043 142
FR-A1- 2 485 945           GB-A- 2 167 397
US-A- 4 705 673            US-A- 4 749 555
US-A1- 2008 159 937        US-A1- 2012 219 480
US-B1- 6 277 345

- **LAMMERS J N J J ET AL: "Effect of polyhydroxyalcohols on COS absorption in aqueous methyldiethanolamine", THE CHEMICAL ENGINEERING JOURNAL AND THE BIOCHEMICAL ENGINEERINGJOURNAL, ELSEVIER, vol. 60, no. 1-3, 1 December 1995 (1995-12-01), pages 123-129, XP027206534, ISSN: 0923-0467 [retrieved on 1995-12-01]**

EP 2 903 718 B1

**Description**

La présente invention concerne le domaine des procédés de désacidification d'un effluent gazeux. L'invention s'applique avantageusement au traitement de gaz d'origine industrielle et du gaz naturel.

On utilise couramment des procédés d'absorption mettant en oeuvre une solution aqueuse d'amines pour retirer les composés acides, notamment le $CO_2$, l'$H_2S$, le COS, le $CS_2$, le $SO_2$ et les mercaptans, présents dans un gaz. Le gaz est désacidifié par mise en contact avec la solution absorbante dans une colonne d'absorption ("absorbeur"), puis la solution absorbante est régénérée thermiquement dans une colonne de régénération ("régénérateur"). Un gaz appauvri en composés acides est alors produit dans l'absorbeur, et un gaz riche en composés acides sort du régénérateur. Par exemple le document US 6,852,144 décrit une méthode d'élimination des composés acides des hydrocarbures. La méthode utilise une solution absorbante eau-N-méthyldiéthanolamine ou eau-triéthanolamine contenant une forte proportion d'un composé appartenant au groupe suivant : pipérazine et/ou méthylpipérazine et/ou morpholine.

Une limitation des solutions absorbantes couramment utilisées dans des applications de désacidification est une sélectivité insuffisante d'absorption du sulfure d'hydrogène ($H_2S$) par rapport au dioxyde de carbone($CO_2$). En effet, dans certains cas de désacidification du gaz naturel, on recherche une élimination sélective de l'$H_2S$ en limitant au maximum l'absorption du $CO_2$. Cette contrainte est particulièrement importante pour des gaz à traiter contenant déjà une teneur en $CO_2$ inférieure ou égale à la spécification désirée. On recherche alors une capacité d'absorption de l'$H_2S$ maximale avec une sélectivité maximale d'absorption de $H_2S$ vis-à-vis du $CO_2$. Cette sélectivité permet de récupérer un gaz acide en sortie de régénérateur ayant une concentration la plus élevée possible en $H_2S$, ce qui limite la taille des unités de la chaîne soufre en aval du traitement et garantit un meilleur fonctionnement. Dans certains cas, une unité d'enrichissement en $H_2S$ est nécessaire pour concentrer en $H_2S$ le gaz acide. Dans ce cas, on recherche également la solution absorbante la plus sélective possible. Les unités de traitement de gaz de queue requièrent également une élimination sélective de l'$H_2S$, qui est renvoyé en amont de la chaîne soufre.

Il est bien connu de l'homme du métier que les amines tertiaires ou les amines secondaires avec un encombrement stérique sévère ont une cinétique de captage du $CO_2$ plus lente que des amines primaires ou les amines secondaires peu encombrées. En revanche, les amines tertiaires ou les amines secondaires avec un encombrement stérique sévère ont une cinétique de captage de l'$H_2S$ instantanée, ce qui permet de réaliser une élimination sélective de l'$H_2S$ basée sur des performances cinétiques distinctes.

En 1950, Frazier et Kohl (Ind. and Eng. Chem., 42, 2288) ont notamment montré que l'amine tertiaire qu'est la N-méthyldiéthanolamine (MDEA) présente un haut degré de sélectivité d'absorption de l'$H_2S$ par rapport au $CO_2$, en raison des performances cinétiques distinctes de cette amine sur ces deux gaz. Cependant, il existe des cas où l'utilisation de la MDEA ne permet pas d'atteindre la capacité d'absorption d'$H_2S$ désirée et présente une sélectivité insuffisante. Ainsi, l'utilisation de la MDEA pour traiter des gaz contenant des pressions partielles élevées en $CO_2$ et $H_2S$, comme c'est par exemple le cas pour certains gaz naturels, présente un intérêt limité. Il en va de même quand il s'agit de réduire les teneurs en $H_2S$ à des faibles pressions partielles, par exemple dans le cadre de traitement de gaz de queue de raffinerie ou des gaz de synthèse.

Les brevets US 4,405,581, US 4,405,582 et US 4,405,583 divulguent l'utilisation de solutions absorbantes à base d'amines secondaires encombrées pour l'élimination sélective de l'$H_2S$ en présence de $CO_2$. Le brevet US 4,405,811 divulgue l'utilisation d'aminoétheralcools tertiaires encombrés, et le brevet US 4,483,833 divulgue l'utilisation d'aminoalcool et d'aminoétheralcools hétérocycliques pour éliminer l'$H_2S$ d'un mélange gazeux comprenant de l'$H_2S$ et du $CO_2$. L'ensemble de ces brevets décrit des performances améliorées en terme de sélectivité et de capacité par rapport à la N-méthyldiéthanolamine. Ces amines présentent un très net avantage par rapport à la MDEA pour des applications mettant en oeuvre des gaz présentant des faibles pressions partielles en gaz acides. L'utilisation de ces amines encombrées reste cependant limitée pour des pressions plus importantes en gaz acide, comme c'est le cas dans la plupart des applications de traitement de gaz naturel. Les gains de capacité d'absorption peuvent être réduits lorsque la pression partielle en gaz acide augmente, d'autant plus que le contrôle de la température dans l'absorbeur impose un taux de charge en gaz acide limité en fond de l'absorbeur. Enfin, la taille des unités de traitement du gaz naturel, mettant en oeuvre plusieurs centaines de tonnes d'amine, rend souvent l'utilisation de solvant à base de ces amines complexes très coûteuse.

Il est également bien connu de l'homme du métier que la neutralisation partielle d'une solution de MDEA par addition d'une faible quantité d'acide phosphorique, sulfurique, ou d'autres acides ou sels d'ammonium permet de réduire la consommation énergétique au rebouilleur pour la régénération de la solution d'amines, ou permet d'atteindre des teneurs en $H_2S$ plus faibles dans le gaz traité en abaissant le taux de charge en composés acides de l'amine régénérée renvoyée en tête d'absorbeur. Ce type de formulation est décrit par exemple dans le brevet FR 2313968 B1 ou la demande de brevet EP 134 948 A2. Le document EP 134 948 A2 indique que ce type de formulations permet de réduire le nombre de plateaux dans l'absorbeur pour une spécification d'absorption d'$H_2S$ donnée, cette réduction permettant de limiter l'absorption du $CO_2$, et donc d'améliorer la sélectivité. Cependant, aucune quantification de cette amélioration n'est indiquée. Par ailleurs, la protonation de l'amine par un acide, telle que par exemple décrite dans EP 134 948 A2, peut avoir un effet négatif dans le haut de l'absorbeur où l'approche à l'équilibre est critique, ce qui peut dans certains cas aboutir à l'effet inverse et conduire à augmenter le nombre de plateaux, ou à augmenter le débit de solvant circulant (van den Brand et col, Sulphur 2002, 27-30 oct 2002).

Il est également connu que l'utilisation d'un solvant organique en mélange avec une amine tertiaire ou une amine secondaire encombrée, pouvant contenir de l'eau, permet d'améliorer la sélectivité d'absorption de l'$H_2S$ vis-à-vis du $CO_2$, comme cela est par exemple décrit dans la demande de brevet FR 2 485 945 ou dans les présentations du procédé Sulfinol (Huffmaster et Nasir, Proceedings of the 74th GPA Annual Convention. Gas Treating and Sulfur Recovery. 1995, 133). L'utilisation du solvant organique à des concentrations typiquement comprises entre 2 et 50% (brevet US 4,085,192) ou entre 20 et 50% (demande de brevet FR 2 485 945) apporte une amélioration de sélectivité dans le cas de pressions en gaz acides élevées. Cet avantage est cependant contrebalancé par une co-absorption plus importante des hydrocarbures. Pour les faibles pressions en gaz acides où la quantité de solvant organique doit être réduite afin de conserver un niveau de capture élevé, le gain de sélectivité sera également réduit.

Lammers et al, The Chemical Engineering Journal, 60 (1995) 123-129, divulgue un procédé d'absorption sélective du COS et de l'$H_2S$ par rapport au $CO_2$, dans lequel on utilise une solution aqueuse de MDEA en combinaison avec un polyol tel que l'éthylène glycol ou le glycérol.

Le demandeur a mis en évidence que l'addition de certains composés organiques, notamment ajoutés en très faibles quantités, à une formulation comprenant de l'eau et au moins une amine tertiaire ou secondaire encombrée permet de contrôler la sélectivité de l'absorption lors de l'absorption sélective de l'$H_2S$ par rapport au $CO_2$ d'un effluent gazeux comprenant de l'$H_2S$ et du $CO_2$. Ledit composé organique, en augmentant la viscosité dynamique de la solution aqueuse de manière contrôlée, permet d'améliorer la sélectivité d'absorption de l'$H_2S$ vis-à-vis du $CO_2$. On désigne un tel composé sous l'expression "composé viscosifiant" dans la présente description.

Ainsi, l'objet de l'invention concerne un procédé d'élimination sélective du sulfure d'hydrogène contenu dans un effluent gazeux comprenant du $CO_2$, dans lequel on effectue une étape d'absorption sélective du sulfure d'hydrogène par rapport au $CO_2$ en mettant en contact ledit effluent avec une solution comprenant (a) de l'eau et (b) au moins un composé azoté, ledit composé comprenant au moins une fonction amine tertiaire ou une fonction amine secondaire encombrée, et dans lequel on contrôle la sélectivité de l'absorption en ajoutant une quantité égale à moins de 20 % en poids de la solution absorbante, de préférence moins de 5 % en poids, plus préférentiellement moins de 1 % en poids, encore plus préférentiellement moins de 0,3 % en poids, d'un composé viscosifiant à la solution absorbante de manière à augmenter la viscosité dynamique de la solution absorbante d'au moins 25 %, de préférence d'au moins 50 %, plus préférentiellement d'au moins 80 %, par rapport à une même solution absorbante sans ledit composé viscosifiant.

Selon l'invention, le composé viscosifiant est choisi dans le groupe constitué par les polyéthers et leurs copolymères.

Selon un mode de réalisation, le composé viscosifiant est un polyéthylèneglycol.

Selon l'invention, le composé azoté peut être choisi dans le groupe constitué par:

- la méthyldiéthanolamine
- la triéthanolamine;
- la diéthylmonoéthanolamine;
- la diméthylmonoéthanolamine;
- l'éthyldiéthanolamine.

La solution absorbante peut comprendre entre 10 % et 90 % en poids dudit au moins un composé azoté (b), entre 10 % et 90 % en poids d'eau (a), et entre 0,01 % en poids et 20 % en poids du composé viscosifiant (c).

La solution absorbante peut comprendre, en outre, un solvant physique choisi parmi le méthanol et le sulfolane.

Selon l'invention, l'étape d'absorption sélective peut être réalisée à une pression comprise entre 1 bar et 120 bar, et à une température comprise entre 20°C et 100°C.

Après l'étape d'absorption, on peut obtenir un effluent gazeux appauvri en composés acides et une solution absorbante enrichie en composés acides, et dans lequel on effectue au moins une étape de régénération de la solution absorbante chargée en composés acides.

L'étape de régénération peut être réalisée à une pression comprise entre 1 bar et 10 bar et une température comprise entre 100°C et 180°C.

L'effluent gazeux peut être choisi parmi le gaz naturel, les gaz de synthèse, les gaz de raffinerie, les gaz acides issus d'une unité aux amines, les gaz issus d'une unité de réduction en queue du procédé Claus, les gaz de fermentation de biomasse, les gaz de cimenterie.

Selon un mode de réalisation de l'invention, l'effluent gazeux est du gaz naturel ou un gaz de synthèse.

D'autres caractéristiques et avantages de l'invention seront mieux compris et apparaîtront clairement à la lecture de la description faite, ci-après, en se référant aux figures annexées et décrites ci-après.

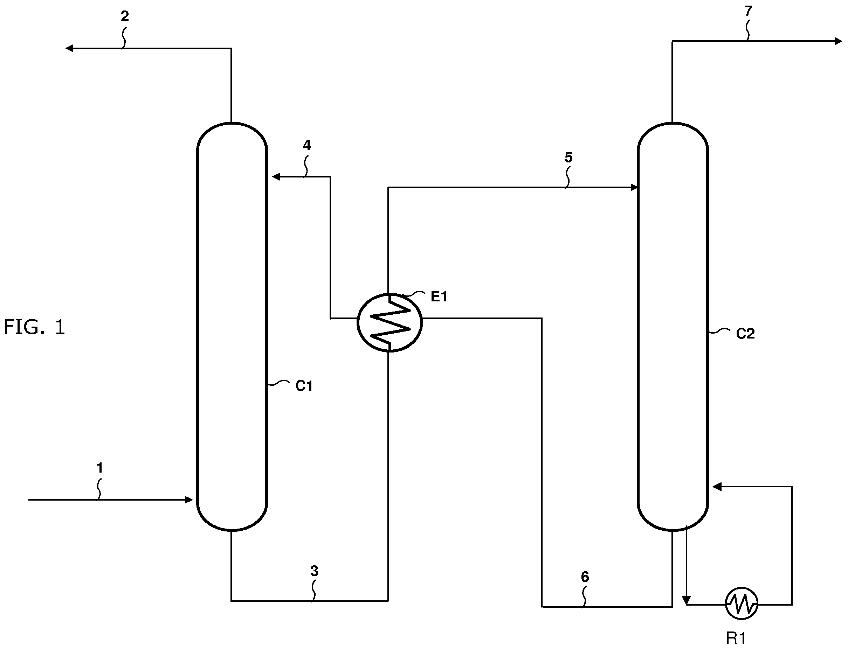

La figure 1 représente un schéma de principe d'un procédé de traitement d'effluents gazeux comprenant des composés acides utilisant une solution absorbante à base d'amines, illustrant notamment le procédé selon l'invention.

Dans la présente description, on entend par "amine tertiaire" toute molécule comportant une ou plusieurs fonctions amines et dont toutes les fonctions amines sont tertiaires.

Dans la présente description, on entend par "amine secondaire encombrée" toute molécule comportant une ou plusieurs fonctions amines et dont les fonctions amines sont tertiaires ou secondaires encombrées, l'une au moins étant secondaire encombrée.

Par "encombrement" de la fonction amine secondaire, on entend soit la présence d'au moins un carbone quaternaire en alpha de l'azote, soit la présence de deux carbones tertiaires en position $\alpha$ et $\alpha$'.

On définira ici un carbone quaternaire comme étant un atome de carbone lié à quatre atomes différents d'un atome d'hydrogène, et un carbone tertiaire comme étant un atome de carbone lié à trois atomes différents d'un atome d'hydrogène.

## Procédé d'élimination sélective de l'$H_2S$ d'effluent gazeux contenant du $CO_2$

Le procédé d'élimination sélective de l'$H_2S$ d'un effluent gazeux contenant du $CO_2$ comprend une étape d'absorption des composés acides que sont l'$H_2S$ et le $CO_2$ par mise en contact de l'effluent gazeux avec une solution absorbante selon l'invention.

En référence à la figure 1, l'étape d'absorption consiste à mettre en contact l'effluent gazeux 1 avec la solution absorbante 4. L'effluent gazeux 1 est introduit en fond de C1, la solution absorbante est introduite en tête de C1. La colonne C1 est munie de moyen de mise en contact entre gaz et liquide, par exemple un garnissage vrac, un garnissage structuré ou des plateaux de distillation. Lors du contact, les fonctions amines des molécules de la solution absorbante réagissent avec les composés acides contenus dans l'effluent, de manière à obtenir un effluent gazeux appauvri en composés acides 2, notamment appauvri en $H_2S$ et $CO_2$, et évacué en tête de C1, et une solution absorbante enrichie en ces mêmes composés acides 3 évacuée en fond de colonne C1, pour être de préférence régénérée.

L'étape d'absorption sélective de l'$H_2S$ peut être réalisée à une pression dans la colonne d'absorption C1 comprise entre 1 bar et 120 bar, de préférence entre 20 bar et 100 bar pour le traitement d'un gaz naturel, de préférence entre 1 bar et 3 bar pour le traitement des fumées industrielles, et à une température dans la colonne d'absorption C1 comprise entre 20°C et 100 °C, préférentiellement comprise entre 30°C et 90 °C, voire entre 30 et 60 °C.

La sélectivité de l'absorption de l'$H_2S$ relativement au $CO_2$ est contrôlée par l'ajout d'une quantité d'un composé viscosifiant dans la solution absorbante mise en contact avec l'effluent gazeux. Le composé viscosifiant selon l'invention correspond à tout composé permettant d'augmenter d'au moins 25 %, de préférence d'au moins 50 % et encore de préférence d'au moins 80 % la viscosité dynamique d'une solution aqueuse d'amine tertiaire ou secondaire encombrée, à une concentration d'amine et à une température donnée, la concentration du composé viscosifiant étant inférieure à 20 % en poids de la solution absorbante, de manière préférée inférieure à 5 % en poids, de manière plus préférée inférieure à 1 % en poids, de manière encore plus préférée inférieure à 0,3 % en poids. Une augmentation de viscosité dynamique d'au moins 25% peut être atteinte avec moins de 20 % en poids de la solution absorbante, de manière préférée inférieure à 5 % en poids, de manière plus préférée inférieure à 1 % en poids, de manière encore plus préférée inférieure à 0,3 % en poids. Il en a de même avec une augmentation de viscosité dynamique d'au moins 50 % et d'au moins 80 %, qui peuvent chacune être atteinte avec moins de 20 % en poids de la solution absorbante, de manière préférée inférieure à 50 % en poids, de manière plus préférée inférieure à 1 % en poids, de manière encore plus préférée inférieure à 0,3 % en poids.

On peut par exemple contrôler la sélectivité de l'absorption de l'$H_2S$ en ajustant la quantité de composé viscosifiant ajouté dans la solution absorbante de manière à obtenir la sélectivité souhaitée, pour un gaz donné traité par un équipement déterminé. Pour cela, un simulateur de procédé peut être utilisé afin de déterminer la viscosité dynamique de la solution régénérée qu'il faut atteindre pour augmenter la sélectivité de manière à atteindre, selon la composition du gaz brut, soit la spécification limite pour le $CO_2$, généralement de 2%, soit une valeur approchant au plus près de cette valeur compte tenu de la limite maximale de viscosité admissible pour le procédé. Une fois déterminée, la viscosité de la solution régénérée peut être ajustée par un appoint approprié d'une quantité déterminée d'un composé viscosifiant selon l'invention.

L'utilisation d'un composé viscosifiant selon l'invention, ajouté à la solution aqueuse comprenant les amines tertiaires ou secondaires encombrées selon l'invention permet d'obtenir une sélectivité d'absorption de l'$H_2S$ vis-à-vis du $CO_2$ plus importante que celle atteinte avec des solutions de même formulation mais sans le composé viscosifiant. L'augmentation de la viscosité dynamique engendrée par l'ajout du composé viscosifiant selon l'invention a pour effet de diminuer l'absorption du $CO_2$ relativement à celle de l'$H_2S$.

La réduction de l'absorption du $CO_2$, en provoquant la baisse du taux de charge en $CO_2$ dans l'absorbeur, permet en outre de déplacer l'équilibre thermodynamique gaz-liquide en faveur de l'absorption de l'$H_2S$. Dans les mises en oeuvre où la cinétique d'absorption de l'$H_2S$ est peu impactée par l'augmentation de la viscosité de la phase liquide, par exemple sur une colonne à plateaux, il est possible de réduire la hauteur de la colonne d'absorption nécessaire pour atteindre une spécification en $H_2S$ donnée en tête d'absorbeur. En effet, cette colonne d'absorption étant classiquement dimensionnée en fonction de la spécification en $H_2S$ recherchée, il est possible de réduire sa hauteur si, pour une même spécification en $H_2S$ souhaitée, l'absorption en $H_2S$ dans la colonne est plus grande. Cet équipement sous pression représente une part importante des coûts d'investissement du procédé, qui peuvent ainsi être avantageusement réduits.

Dans tous les cas, l'augmentation contrôlée de la viscosité dynamique de la solution absorbante permet une amélioration notable de la sélectivité d'absorption de l'$H_2S$ vis-à-vis du $CO_2$.

L'étape d'absorption peut être suivie d'une étape de régénération de la solution absorbante enrichie en composés acides, par exemple tel que représenté schématiquement à la figure 1.

L'étape de régénération consiste notamment à chauffer et, éventuellement à détendre, la solution absorbante enrichie en composés acides afin de libérer les composés acides sous forme gazeuse. La solution absorbante enrichie en composés acides 3 est introduite dans l'échangeur de chaleur E1, où elle est réchauffée par le flux 6 provenant de la colonne de régénération C2. La solution 5 réchauffée en sortie de E1 est introduite dans la colonne de régénération C2.

La colonne de régénération C2 est équipée d'internes de mise en contact entre gaz et liquide, par exemple des plateaux, des garnissages en vrac ou structurés. Le fond de la colonne C2 est équipé d'un rebouilleur R1 qui apporte la chaleur nécessaire à la régénération en vaporisant une fraction de la solution absorbante. Dans la colonne C2, sous l'effet de la mise en contact de la solution absorbante arrivant par 5 avec la vapeur produite par le rebouilleur, les composés acides sont libérés sous forme gazeuse et évacués en tête de C2 par le conduit 7. La solution absorbante régénérée 6, c'est-à-dire appauvrie en composés acides 6 est refroidie dans E1, puis recyclée dans la colonne d'absorption C1 par le conduit 4.

L'étape de régénération du procédé selon l'invention peut être réalisée par régénération thermique, éventuellement complétée par une ou plusieurs étapes de détente.

La régénération peut être effectuée à une pression dans C2 comprise entre 1 bar et 5 bar, voire jusqu'à 10 bar et à une température dans C2 comprise entre 100°C et 180°C, de préférence comprise entre 130°C et 170°C. De manière préférée, la température de régénération dans la colonne de régénération C2 est comprise entre 155°C et 180°C dans le cas où l'on souhaite réinjecter les gaz acides. De manière préférée, la température de régénération dans la colonne de régénération C2 est comprise entre 115°C et 130°C dans les cas où le gaz acide est envoyé à l'atmosphère ou dans un procédé de traitement aval, comme un procédé Claus ou un procédé de traitement de gaz de queue.

Avantageusement, le procédé selon l'invention permet de réduire les besoins énergétiques pour la régénération de la solution absorbante, dans la mesure où l'amélioration de la sélectivité diminue la quantité de $CO_2$ captée, la chaleur d'absorption du $CO_2$ étant généralement comprise entre 50 et 80 kJ/mole.

Composition de la solution absorbante

Selon l'invention, la viscosité dynamique de la solution absorbante peut être ajustée par l'addition d'un composé viscosifiant, dont la concentration permet de contrôler la sélectivité du procédé par le contrôle de la viscosité dynamique de la solution absorbante.

La solution absorbante utilisée dans le procédé selon l'invention comprend:

(a) de l'eau;
(b) au moins un composé azoté, ledit composé comprenant une ou plusieurs fonctions amines tertiaires ou fonctions amines secondaire encombrées (deux carbones tertiaires en alpha de l'azote ou au moins un carbone quaternaire en alpha de l'azote).
Comme exemples d'amines tertiaires, on peut citer, de façon non limitative la méthyldiéthanolamine, la triéthanolamine, la diéthylmonoéthanolamine, la diméthylmonoéthanolamine, l'éthyldiéthanolamine.
c) un ou plusieurs composés viscosifiants, grâce auxquels on contrôle la sélectivité de l'absorption de l'$H_2S$ par rapport au $CO_2$. Ledit composé viscosifiant permet une augmentation d'au moins 25 %, de préférence d'au moins 50 %, et encore de préférence d'au moins 80 %, de la viscosité dynamique d'une solution aqueuse avec au moins un composé azoté (b) tel que décrit plus haut, à une concentration d'amine et à une température donnée, la concentration du composé viscosifiant étant inférieure à 20 % en poids de la solution absorbante, de manière préférée inférieure à 5 % en poids, de manière plus préférée inférieure à 1 % en poids, de manière encore plus préférée inférieure à 0,3 % en poids.

Les composés viscosifiants sont choisis dans le groupe constitué par les composés suivants:
les polyéthers et leurs copolymères, tels que les polyéthylèneglycols, les polypropylèneglycols, les copolymères de l'oxyde d'éthylène avec d'autres époxyalcanes tels que par exemple l'oxyde de propylène, ces différents polymères ou copolymères pouvant être modifiés par des motifs hydrophobes.

Les composés viscosifiants peuvent être utilisés seuls ou en association entre eux.

Selon un mode de réalisation de l'invention, le composé viscosifiant ajouté à la solution absorbante est un polyéthylèneglycol. De préférence, on ajoute moins de 20 % en poids de la solution absorbante, de préférence moins de 5 % en poids, de manière plus préférée moins de 1 % en poids, et de manière encore plus préférée moins de 0,3 % en poids, du polyéthylèneglycol à la solution absorbante.

Selon l'invention, la solution peut comprendre :

- entre 10 % et 90 % en poids, de préférence entre 20 % et 60 % poids, de manière très préférée entre 25 % et 50 % poids, d'un ou plusieurs composés azotés (b);
- et entre 10 % et 90 % en poids, de préférence entre 40 % et 80 % en poids, de manière très préférée entre 50 % à 75 % en poids d'eau (a);
- et entre 0,01 % en poids et 20 % en poids du composé viscosifiant (c).

Selon l'invention, la solution peut comporter un solvant physique choisi parmi le méthanol et le sulfolane.

Nature des effluents gazeux

La solution absorbante peut être utilisée pour désacidifier les effluents gazeux suivants : le gaz naturel, les gaz de synthèse, les gaz de raffinerie, les gaz acides issus d'une unité aux amines, les gaz issus d'une unité de réduction en queue du procédé Claus, les gaz de fermentation de biomasse, les gaz de cimenterie. Ces effluents gazeux contiennent un ou plusieurs des composés acides suivants : le $CO_2$, l'$H_2S$, des mercaptans, du COS, du $CS_2$, le $SO_2$.

Le procédé selon l'invention peut être mis en oeuvre pour éliminer sélectivement l'$H_2S$ d'un gaz de synthèse. Le gaz de synthèse contient du monoxyde de carbone CO, de l'hydrogène $H_2$ (généralement dans un ratio $H_2$/CO égal à 2), de la vapeur d'eau (généralement à saturation à la température mise en oeuvre lors de l'étape d'absorption) et du dioxyde de carbone $CO_2$ (de l'ordre de la dizaine de %). La pression est généralement comprise entre 20 bar et 30 bar, mais peut atteindre jusqu'à 70 bar. Il contient, en outre, des impuretés soufrées ($H_2S$, COS, etc.), azotées ($NH_3$, HCN) et halogénées.

Le procédé selon l'invention peut être mis en oeuvre pour éliminer sélectivement l'$H_2S$ d'un gaz naturel. Le gaz naturel est constitué majoritairement d'hydrocarbures gazeux, mais peut contenir plusieurs des composés acides suivants : le $CO_2$, l'$H_2S$, des mercaptans, du COS, du $CS_2$. La teneur de ces composés acides est très variable et peut aller jusqu'à 40% pour le $CO_2$ et l'$H_2S$. La température du gaz naturel peut être comprise entre 20°C et 100°C. La pression du gaz naturel à traiter peut être comprise entre 10 bar et 120 bar. L'invention peut être mise en oeuvre pour atteindre des spécifications généralement imposées sur le gaz désacidifié, qui sont 2% de $CO_2$ dans le cas d'une application sélective, de 4 ppm d'$H_2S$, et de 10 à 50 ppm volume de soufre total.

**Exemples**

**Exemple 1 : Calcul d'un absorbeur à garnissage**

On met en oeuvre l'étape d'absorption du procédé selon l'invention pour traiter un gaz naturel dont la pression à l'entrée de l'absorbeur est de 71,9 bar et la température de 31,2°C. La composition molaire à l'entrée de l'absorbeur est la suivante : 85 % mol de méthane, 4,9 %mol d'éthane, 1,41 % de propane, 0,26 % d'isobutane, 0,59 % de n-butane, 0,15 % d'isopentane, 0,30 % de n-pentane et 0,14 % de n-hexane. Le gaz contient par ailleurs 0,09 % d'eau, 2,53 % d'azote ainsi 2,13 % de $CO_2$ et 2,49 % d'$H_2S$. Les spécifications pour le gaz traité sont de 2 ppmv pour $H_2S$ et 2 % molaire pour le $CO_2$. Une sélectivité d'élimination de l'$H_2S$ vis à vis du $CO_2$ maximale est donc requise.

Le gaz brut à un débit de 19 927 kmole/h est mis en contact à contre-courant avec une solution aqueuse de MDEA à 46,8 % en poids circulant à un débit de 400 $Sm^3$/h dans un absorbeur de 3 m. de diamètre interne rempli de garnissage structuré développant une aire interfaciale de 232 $m^2/m^3$. La température de la solution d'amine régénérée en tête d'absorbeur est de 44,6°C. L'absorbeur est modélisé par 18 plateaux réels, sur chacun desquels les flux de gaz acides sont calculés en utilisant l'approche du double film. Un calcul itératif permet de résoudre les bilans matière et thermique plateau par plateau et de calculer pour une hauteur de garnissage donnée les profils de concentration en gaz acide et en température dans l'absorbeur.

Pour le cas de référence, les taux de charge en $H_2S$ et $CO_2$ de l'amine régénérée sont respectivement de 7 $10^{-4}$ mole de $H_2S$ par mole d'amine et de 3 $10^{-3}$ mole de $CO_2$ par mole d'amine.

Selon l'art antérieur, on peut abaisser le taux de charge de l'amine régénérée introduite en tête d'absorbeur par ajout d'un sel ou d'un acide comme décrit notamment dans le brevet FR 2313968 B1. Dans le cas le plus favorable de cet art antérieur, les taux de régénération tendent vers zéro (Vorber et col, Gas Processors Association 27ème conférence, 2010, 22-24 sept 2010). L'amélioration de sélectivité maximale potentiellement apportée par l'addition d'un sel ou d'un acide comme décrit dans l'art antérieur est donc évaluée en prenant en compte une amine totalement

régénérée.

Selon notre invention, on conserve des taux de charge de l'amine régénérée identiques à ceux du cas de référence. On fait varier la viscosité dynamique de la solution aqueuse de MDEA à 46,8 % en poids, cette dernière pouvant être ajustée par un agent viscosifiant selon l'invention. Ajouté en quantité très faible, de préférence à moins de 1 % en poids, cet additif augmente la viscosité sans modifier les équilibres liquide-vapeur ou la cinétique intrinsèque de réaction avec le $CO_2$. Le seul paramètre d'ajustement du calcul est donc la viscosité de la solution aqueuse d'amine. Pour chaque étage réel, la viscosité de la solution avec viscosifiant est calculée en multipliant la valeur de la viscosité de la solution de référence (MDEA 46,8%) à la température du plateau par le rapport des viscosités à 50°C de la solution viscosifiée et de la solution de référence. Un effet inversement proportionnel de la viscosité sur les coefficients de diffusion en phase liquide, ainsi que les effets de la viscosité sur les paramètres de transfert propre au garnissage sont également pris en compte dans le calcul.

L'absorbeur est dimensionné par la hauteur de garnissage nécessaire permettant d'atteindre la spécification requise de 2ppmv $H_2S$ dans le gaz traité. On obtient pour chaque formulation la hauteur de garnissage correspondante ainsi que la concentration en $CO_2$ dans le gaz traité. La sélectivité d'absorption de $H_2S$ vis-à-vis du $CO_2$ est définie par le rapport des rendements d'élimination des deux gaz :

$$S = \frac{\eta_{H_2S}}{\eta_{CO_2}}$$

Ces rendements d'élimination sont définis respectivement par

$$\eta_{H_2S} = 1 - \frac{F_{Gaztraité} \times y_{Gaztraité}^{H_2S}}{F_{Gazbrut} \times y_{Gazbrut}^{H_2S}}$$

et

$$\eta_{CO_2} = 1 - \frac{F_{Gaztraité} \times y_{Gaztraité}^{CO_2}}{F_{Gazbrut} \times y_{Gazbrut}^{CO_2}}$$

Dans ces expressions, F désigne le débit molaire de gaz acide, brut ou traité; y désigne la fraction molaire en gaz acide, $H_2S$ ou $CO_2$.

Le tableau 1 ci-dessous compare les résultats obtenus par calcul pour les différentes formulations de MDEA à 46,8 % en poids, en variant soit le taux de charge de l'amine régénérée selon l'art antérieur soit sa viscosité dynamique par ajout d'un additif viscosifiant selon l'invention.

**Tableau 1**

| | Taux de charge après régénération | | μ (50°C) (cP) | Yco₂ sortie % vol | S* | Gain S | Hauteur garnissage (m) | Ecart hauteur garnissage |
|---|---|---|---|---|---|---|---|---|
| | $\alpha_{H2S}$ (mol/mol) | $\alpha_{CO2}$ (mol/mol) | | | | | | |
| **1** - Référence | 7E-04 | 3E-03 | 3,17 | 1,58 | 3,6 | réf. | 5,00 | ref. |
| **2**-Régénération maximale selon l'art antérieur | 0E+00 | 0E+00 | 3,17 | 1,61 | 3,7 | 4 % | 4,80 | -4 % |
| **3** - Procédé selon l'invention | 7E-04 | 3E-03 | 4 | 1,65 | 4 | 12 % | 5,05 | 1 % |
| **4** - Procédé selon l'invention | 7E-04 | 3E-03 | 6 | 1,73 | 4,7 | 33 % | 5,25 | 5 % |

(suite)

| | Taux de charge après régénération | | $\mu$ (50°C) (cP) | $Yco_2$ sortie % vol | S* | Gain S | Hauteur garnissage (m) | Ecart hauteur garnissage |
|---|---|---|---|---|---|---|---|---|
| | $\alpha_{H2S}$ (mol/mol) | $\alpha_{CO2}$ (mol/mol) | | | | | | |
| **5** - Procédé selon l'invention | 7E-04 | 3E-03 | 8 | 1,78 | 5,2 | 47 % | 5,50 | 10 % |
| **6** - Procédé selon l'invention | 7E-04 | 3E-03 | 10 | 1,81 | 5,7 | 60 % | 5,75 | 15 % |
| **7** - Procédé selon l'invention | 7E-04 | 3E-03 | 12 | 1,83 | 6 | 69 % | 6,00 | 20 % |
| (*) **S = Sélectivité** | | | | | | | | |

Cet exemple illustre le gain en sélectivité obtenu en augmentant la viscosité de la formulation de référence MDEA 46,8 % en poids (3,17 cP à 50°C). Il illustre le procédé selon l'invention, dans lequel la sélectivité est contrôlée par l'ajout d'un composé viscosifiant dont la concentration permet d'ajuster la viscosité.

Ainsi l'ajout d'un composant viscosifiant selon l'invention, permettant d'augmenter d'au moins 25% (4 cP à 50°C) la valeur de la viscosité dynamique, permet, dans cet exemple, une augmentation d'au moins 12% de la sélectivité.

Avec l'ajout d'un viscosifiant permettant d'augmenter de 89 % la viscosité dynamique de la solution absorbante, soit au moins 80% (6cPo à 50°C), la sélectivité est augmentée de 33%.

La viscosité la plus élevée (12cP) dans cet exemple permet d'augmenter de 69% la valeur de la sélectivité. Dans tous les cas, la sélectivité d'élimination de l'$H_2S$ par rapport au $CO_2$ d'une formulation de MDEA 46,8 % en poids avec un composé viscosifiant selon l'invention est plus élevée que la même formulation sans le composé viscosifiant dont la régénération serait poussée au maximum, comme illustrée par la seconde entrée du tableau 1. En effet, une telle formulation avec des taux de charge après régénération tendant vers zéro, qui pourrait être obtenue en utilisant par exemple un additif comme ceux décrits dans les brevets FR 2318968 B1 ou la demande de brevet EP 134 948, ne permettrait pas de dépasser 1,61 % en concentration de $CO_2$ dans le gaz traité (sélectivité de 3,7), contre au moins 1,65 % dans le cas d'une formulation selon l'invention (sélectivité supérieure à 4).

La mise en oeuvre du procédé selon l'invention ici décrite permet donc un contrôle et une amélioration de la sélectivité de manière efficace et inattendue par rapport à l'antérieur.

Dans cet exemple, l'augmentation de viscosité nécessite une augmentation de la hauteur de garnissage pour réaliser la spécification requise de 2ppmv d'$H_2S$ dans le gaz traité. Comme le montre le tableau 2 ci dessous, cette augmentation de la hauteur de garnissage, qui atteint au maximum 20% pour une viscosité de 12 cP reste toutefois modérée en terme de coût d'investissement supplémentaire pour la colonne d'absorption. Ainsi, pour le cas à 12 cP qui engendre le surplus de hauteur maximum (20%), le surcoût est de 6,1% par rapport au cas de référence.

**Tableau 2**

| Cas | $\mu$ (50°C) (cP) | Sélectivité | Gain sélectivité | Hauteur garnissage (m) | Coût absorbeur monté (M€) | Ecart coût |
|---|---|---|---|---|---|---|
| 1 - Référence | 3,17 | 3,6 | référence | 5,00 | 3,037 | référence |
| 2 | 3,17 | 3,7 | 4 % | 4,80 | 2,992 | -1,5 % |
| 3 | 4 | 4 | 12 % | 5,05 | 3,038 | 0,0 % |
| 4 | 6 | 4,7 | 33 % | 5,25 | 3,082 | 1,5 % |
| 5 | 8 | 5,2 | 47 % | 5,50 | 3,130 | 3,1 % |
| 6 | 10 | 5,7 | 60 % | 5,75 | 3,176 | 4,6 % |
| 7 | 12 | 6 | 69 % | 6,00 | 3,221 | 6,1 % |

**Exemple 2 : Calcul d'un absorbeur à plateaux**

On met en oeuvre l'étape d'absorption du procédé selon l'invention pour traiter un gaz naturel ayant les mêmes caractéristiques que dans l'exemple précédent. Le gaz brut à un débit de 19 927 kmole/h est mis en contact à contre-courant avec une solution aqueuse de MDEA à 46.8%poids circulant à un débit de 400 Sm$^3$/h dans un absorbeur de 3,5m de diamètre interne équipés de plateaux à clapets à 4 passes, l'espacement entre les plateaux étant de 60cm. La température de la solution d'amine régénérée en tête d'absorbeur est de 44.6°C. L'absorbeur est modélisé par n plateaux réels, en prenant en compte de manière rigoureuse la géométrie des plateaux, sur chacun desquels les flux de gaz acides sont calculés en utilisant l'approche du double film. Un calcul itératif permet de résoudre les bilans matière et thermique plateau par plateau et de calculer selon le nombre de plateaux n les profils de concentration en gaz acide et en température dans l'absorbeur.

Pour le cas de référence, les taux de charge en $H_2S$ et $CO_2$ de l'amine régénérée sont respectivement de 7.10$^{-4}$ mole de $H_2S$ par mole d'amine et de 3.10$^{-3}$ mole de $CO_2$ par mole d'amine.

Selon l'art antérieur, on peut abaisser le taux de charge de l'amine régénérée introduite en tête d'absorbeur par ajout d'un sel ou d'un acide comme décrit notamment dans le brevet FR 2313968 B1. Dans le cas le plus favorable de cet art antérieur, les taux de régénération tendent vers zéro (Vorber et col, Gas Processors Association 27ème conférence, 2010, 22-24 sept 2010). L'amélioration de sélectivité maximale potentiellement apportée par l'addition d'un sel ou d'un acide comme décrit dans l'art antérieur est donc évaluée en prenant en compte une amine totalement régénérée.

Selon notre invention, on conserve des taux de charge de l'amine régénérée identiques à ceux du cas de référence. On fait varier la viscosité dynamique de la solution aqueuse de MDEA à 46,8 % en poids, cette dernière pouvant être ajustée par un agent viscosifiant selon l'invention. Ajouté en quantité très faible, de préférence à moins de 1%pds, cet additif augmente la viscosité sans modifier les équilibres liquide-vapeur ou la cinétique intrinsèque de réaction avec le $CO_2$. Le seul paramètre d'ajustement du calcul est donc la viscosité de la solution aqueuse d'amine. Pour chaque étage réel, la viscosité de la solution avec viscosifiant est calculée en multipliant la valeur de la viscosité de la solution de référence (MDEA 46,8 %) à la température du plateau par le rapport des viscosités à 50°C de la solution viscosifiée et de la solution de référence. Un effet inversement proportionnel de la viscosité sur les coefficients de diffusion en phase liquide, ainsi que les effets de la viscosité sur les paramètres de transfert propre au type de plateau utilisé sont également pris en compte dans le calcul.

L'absorbeur est dimensionné par le nombre de plateaux nécessaire permettant d'atteindre la spécification requise de 2ppmv $H_2S$ dans le gaz traité. On obtient pour chaque calcul ce nombre de plateaux n ainsi que la concentration en $CO_2$ correspondante dans le gaz traité. La sélectivité d'absorption de $H_2S$ vis-à-vis du $CO_2$ est définie comme dans l'exemple précédent.

Le tableau 3 ci-dessous compare les résultats obtenus par calcul pour les différentes formulations de MDEA à 46,8 % en poids, en variant soit le taux de charge de l'amine régénérée soit sa viscosité dynamique par ajout d'un additif viscosifiant selon l'invention.

**Tableau 3**

| | Taux de charge après régénération | | μ(50°C) (cP) | Yco$_2$ sortie % vol | Sélectivité | Ecart hauteur |
|---|---|---|---|---|---|---|
| | α$_{H2S}$ (mol/mol) | α$_{CO2}$ (mol/mol) | | | | |
| **1** - Référence | 7E-04 | 3E-03 | 3,17 | 1,20 | 2,19 | réf. |
| **2** - Régénération maximale selon l'art antérieur | 0E+00 | 0E+00 | 3,17 | 1,25 | 2,29 | 5 % |
| **3** - Procédé selon l'invention | 7E-04 | 3E-03 | 4 | 1,26 | 2,34 | 7 % |
| **4** - Procédé selon l'invention | 7E-04 | 3E-03 | 6 | 1,42 | 2,80 | 28 % |
| **5** - Procédé selon l'invention | 7E-04 | 3E-03 | 8 | 1,53 | 3,26 | 49 % |
| **6** - Procédé selon l'invention | 7E-04 | 3E-03 | 10 | 1,58 | 3,52 | 61 % |
| **7** - Procédé selon l'invention | 7E-04 | 3E-03 | 12 | 1,65 | 4,01 | 83 % |

Cet exemple illustre le gain en sélectivité obtenu en augmentant la viscosité de la formulation de référence MDEA 46,8 % (3,17 cP à 50°C).

Il illustre le procédé selon l'invention, dans lequel la sélectivité est contrôlée par l'ajout d'un composé viscosifiant dont la concentration permet d'ajuster la viscosité. Ainsi l'ajout d'un composant viscosifiant selon l'invention permettant d'augmenter d'au moins 25% (4 cP à 50°C) la valeur de la viscosité dynamique permet dans cet exemple une augmentation d'au moins 7 % de la sélectivité.

Avec l'ajout d'un viscosifiant permettant d'augmenter de 89 % (6cP à 50°C), soit au moins 80 %, la viscosité dynamique de la solution absorbante, la sélectivité est augmentée de 28 %.

La viscosité la plus élevée (12cP) dans cet exemple permet d'augmenter de 83% la valeur de la sélectivité. Dans tous les cas, la sélectivité d'élimination de $H_2S$ par rapport au $CO_2$ d'une formulation de MDEA 46,8 % avec un composé viscosifiant selon l'invention est plus élevée que la même formulation sans ce composé viscosifiant, et dont la régénération serait poussée au maximum, comme illustrée par la seconde entrée du tableau 3. En effet, une telle formulation avec des taux de charge après régénération tendant vers zéro, qui pourrait être obtenue en utilisant par exemple un additif comme ceux décrits dans les documents FR 2318968 ou EP 134 948, ne permettrait pas de dépasser 1,25 % en concentration de $CO_2$ dans le gaz traité (sélectivité de 2,29) contre au moins 1,26 % dans le cas d'une formulation selon l'invention (sélectivité supérieure à 2,34).

Dans cet exemple, l'augmentation de viscosité permet de réduire le nombre de plateaux nécessaire pour réaliser la spécification requise de 2ppmv $H_2S$ dans le gaz traité. Comme illustré dans le tableau 4 ci-dessous, cette augmentation qui permettrait d'économiser 3 plateaux sur 16 pour une viscosité de 12 cP permet de réduire le coût d'investissement pour la colonne d'absorption de plus de 12 %.

**Tableau 4**

| Cas | μ (50°C) (cP) | Sélectivité | Gain sélectivité | Nombre de plateaux | Coût absorbeur monté (M€) | Gain CAPEX |
|---|---|---|---|---|---|---|
| 1 - Référence | 3,17 | 2,19 | référence | 16 | 4,882 | référence |
| 2 | 3,17 | 2,29 | 5 % | 15 | 4,564 | 6,5 % |
| 3 | 4 | 2,34 | 7 % | 16 | 4,882 | 0,0 % |
| 4 | 6 | 2,8 | 28 % | 15 | 4,564 | 6,5 % |
| 5 | 8 | 3,26 | 49 % | 14 | 4,493 | 8,0 % |
| 6 | 10 | 3,52 | 61 % | 14 | 4,493 | 8,0 % |
| 7 | 12 | 4,01 | 83 % | 13 | 4,284 | 12,2 % |

La mise en oeuvre du procédé selon l'invention ici décrite permet donc un contrôle et une amélioration de la sélectivité de manière efficace et inattendue par rapport à l'antérieur.

Un autre avantage de l'invention mis en oeuvre dans cet exemple sur colonne à plateaux consiste en la réduction de la hauteur de la colonne d'absorption.

**Exemple 3 : Mesures de viscosités dynamiques de différentes formulations**

On mesure la viscosité dynamique de différentes solutions aqueuses d'amine à 40°C à l'aide d'un viscosimètre automatique de type AMVn Anton Paar, fonctionnant selon le principe du viscosimètre d'Hoepler. La viscosité est déduite de la mesure du temps de chute d'une bille dans un capillaire de diamètre 1,6 mm incliné d'un angle de 80°, conformément aux normes DIN 53015 et ISO 12058, ainsi que de la mesure de densité mesurée sur un densimètre Anton Paar DMA 4100 à 40°C.

Ces mesures réalisées à 40°C permettent de mettre en évidence l'effet viscosifiant des différents composés mis en oeuvre selon l'invention tels que l'impact de cet effet viscosifiant sur la sélectivité a été illustré dans les exemples 1 et 2 comparant l'effet de la viscosité dynamique d'une formulation selon l'invention caractérisée par sa valeur à 50°C.

A titre d'exemple, on compare la viscosité dynamique de différentes formulations contenant entre 45 % et 47 % en poids de méthyldiéthanolamine (MDEA) (b) et un composé viscosifiant (c) avec celle des solutions de MDEA au même pourcentage poids sans additif viscosifiant.

Les composés (c) indiqués dans le tableau 5 ci-dessous sont les suivants :

- diglycérol, qui ne fait pas partie de l'invention.

- PEG 35000 : polyéthylène glycol de masse molaire moyenne en poids égale à 35000 g/mole.

- Polyacrylamid-PAA 520kDa : copolymère d'acrylamide et d'acide acrylique contenant 80% d'acrylamide et 20% d'acide acrylique en fraction molaire et dont la masse molaire moyenne en poids est voisine de 520000 g/mole, qui ne fait pas partie de l'invention.

- Polyacrylamide-PAA 20MDa : copolymère d'acrylamide et d'acide acrylique contenant 80% d'acrylamide et 20% d'acide acrylique en fraction molaire et dont la masse molaire moyenne en poids est de voisine de 20 millions de Dalton, qui ne fait pas partie de l'invention.

**Tableau 5**

| Composé (b) | % poids | Composé (c) | % poids | Viscosité à 40°C (mPas) | Gain en viscosité (%) |
|---|---|---|---|---|---|
| MDEA | 45,8 | - | - | 4,18 | - |
| MDEA | 45,8 | Diglycerol | 9,9 | 7,48 | 79 |
| MDEA | 46,5 | - | - | 4,33 | - |
| MDEA | 46,5 | Polyglycerol-4 | 11,1 | 8,50 | 96 |
| MDEA | 47,0 | - | - | 4,45 | - |
| MDEA | 47,0 | PEG 35kDa | 1 | 7,10 | 60 |
| MDEA | 47,0 | Polyacrylamid-PAA 52kDa | 0,1 | 8,29 | 86 |
| MDEA | 47,0 | Polyacrylamid-PAA 20MDa | 0,024 | 8,45 | 90 |

Cet exemple illustre différents composés (c) permettant d'augmenter la viscosité d'une solution aqueuse de MDEA d'au moins 50 % en ajoutant moins de 20 % dudit composé à la formulation. Cet effet est observable pour des concentrations inférieures ou égales à 1 % en poids pour le PEG 35000 et pour une concentration inférieure ou égale à 0,1% en poids pour les polyacrylamides exemplifiés.

**Exemple 4 : Mesures de viscosités cinématiques d'une solution aqueuse de MDEA viscosifiée par du xanthane** (qui ne fait pas partie de l'invention)

On mesure la viscosité cinématique de différentes solutions aqueuses d'amine à 40°C à l'aide d'un viscosimètre capillaire Prolabo. La viscosité est déduite de la mesure du temps d'écoulement entre deux repères de l'interface liquide. Le temps d'écoulement obtenu par la moyenne de deux mesures est multiplié par la constante de tube pour obtenir la viscosité cinématique. On en déduit la viscosité dynamique en multipliant ce résultat par la densité mesurée sur un densimètre Anton Paar DMA4500M.

Ces mesures réalisées à 40°C permettent de mettre en évidence l'effet viscosifiant des différents composés tels que l'impact de cet effet viscosifiant sur la sélectivité a été illustré dans les exemples 1 et 2 comparant l'effet de la viscosité dynamique d'une formulation caractérisée par sa valeur à 50°C.

En suivant cette procédure, on compare dans le tableau 6 ci-dessous la viscosité dynamique entre une solution aqueuse de MDEA à 47 % en poids (référence) et une solution contenant 47 % en poids de méthyldiéthanolamine et 0,1 % de gomme xanthane (G1253 de chez Sigma, de masse molaire d'environ $2.10^6$ selon Sato et al., Polym. J., 16(5), 423, 1984). Pour la première solution, la mesure est réalisée sur un tube de diamètre 0,8 mm dont la constante est 0,0002696 Poise.s$^{-1}$.g$^{-1}$cm$^3$. Pour la seconde, la mesure est réalisée sur un tube de diamètre 1,09 mm dont la constante est 0,000960 Poise.s$^{-1}$.g$^{-1}$cm$^3$.

**Tableau 6**

| Composé (b) | % poids | Composé (c) | % poids | Viscosité à 40 °C (mPas) | Gain en viscosité (%) |
|---|---|---|---|---|---|
| MDEA | 47,0 | - | - | 5 | - |
| MDEA | 47,0 | xanthane | 0,1 | 20 | 300 |

Cet exemple illustre que l'addition de xanthane permet d'augmenter la viscosité d'une solution aqueuse de MDEA de plus de 80% en ajoutant moins de 1% dudit composé à la formulation.

**Exemple 5 : Mesure de capacité et sélectivité d'élimination de l'H$_2$S d'un effluent gazeux contenant de l'H$_2$S et du CO$_2$ par une solution aqueuse de MDEA comprenant du polyéthylèneglycol**

Dans cet exemple, on mesure la capacité et la sélectivité d'élimination de H$_2$S d'un effluent gazeux contenant H$_2$S et CO$_2$ par une solution aqueuses de MDEA à 47 % en poids et par une solution aqueuse de MDEA à 47 % poids comprenant un polyéthylèneglycol de masse moléculaire 35000 g/mole en tant que composé viscosifiant (voir tableau 7).

On réalise un test d'absorption à 40°C sur des solutions aqueuses d'amine au sein d'un réacteur parfaitement agité ouvert coté gaz.

Pour chaque solution, l'absorption est réalisée dans un volume liquide de 50 cm$^3$ par bullage d'un courant gazeux constitué d'un mélange azote : dioxyde de carbone : hydrogène sulfuré de 89:10:1 en proportions volumiques, d'un débit de 30NL/h pendant 90 minutes.

On mesure à l'issue du test le taux de charge en H$_2$S obtenu ($\alpha$ =nb de mole de H$_2$S /kg de solvant) ainsi que la sélectivité d'absorption vis-à-vis du CO$_2$.

Cette sélectivité S est définie de la manière suivante :

$$S = \frac{\alpha_{H_2S}}{\alpha_{CO_2}} \times \frac{(\text{Concentration du mélange gazeux en CO}_2)}{(\text{Concentration du mélange gazeux en H}_2\text{S})}$$

$$S = 10 \times \frac{\alpha_{H_2S}}{\alpha_{CO_2}}.$$

Dans les conditions du test décrit ici

A titre d'exemple, on peut comparer les taux de charge et la sélectivité entre une solution absorbante de méthyldiéthanolamine à 47 % en poids à une solution absorbante utilisée dans le procédé selon l'invention contenant méthyldiéthanolamine à 47 % en poids contenant 1% en poids de polyéthylèneglycol de masse molaire 35000 g/mole dont la viscosité est augmentée de 60% par rapport à la solution de référence (voir exemple 3).

**Tableau 7**

| Composé (b) | % poids | Composé (c) | % poids | Viscosité à 40°C (mPas) | Taux de charge en H$_2$S (mol/kg) | Sélectivité H$_2$S/CO$_2$ |
|---|---|---|---|---|---|---|
| MDEA | 47,0 | - | - | 4,5 | 0,16 | 6,30 |
| MDEA | 47,0 | PEG 35000 | 1,0 | 7,1 | 0,16 | 9,40 |

Cet exemple illustre le gain en sélectivité pouvant être atteints avec une solution absorbante utilisée dans le procédé selon l'invention, comprenant 47 % en poids de MDEA et 1% de PEG 35000, additif viscosifiant permettant d'élever la viscosité dynamique de la solution absorbante de 60%.

Cet exemple illustre par ailleurs que l'augmentation de viscosité n'altère pas la vitesse d'absorption de H$_2$S, le taux de charge atteint après 90 minutes étant identique pour les deux formulations.

**Revendications**

1. Procédé d'élimination sélective du sulfure d'hydrogène contenu dans un effluent gazeux comprenant du CO$_2$, dans lequel on effectue une étape d'absorption sélective du sulfure d'hydrogène par rapport au CO$_2$ en mettant en contact ledit effluent avec une solution absorbante comprenant (a) de l'eau et (b) au moins un composé azoté, ledit composé comprenant au moins une fonction amine tertiaire ou une fonction amine secondaire encombrée comprenant au moins un carbone quaternaire en alpha de l'azote ou deux carbones tertiaires en position $\alpha$ et $\alpha'$ de l'azote, et dans lequel on contrôle la sélectivité de l'absorption du sulfure d'hydrogène par rapport au CO$_2$ en ajoutant une quantité égale à moins de 20 % en poids de la solution absorbante d'un composé viscosifiant (c) à ladite solution absorbante de manière à augmenter la viscosité dynamique de la solution absorbante d'au moins 25 % par rapport à une même solution absorbante sans ledit composé viscosifiant, ladite quantité du composé viscosifiant (c) étant ajustée afin d'obtenir la sélectivité souhaitée, et ledit composé viscosifiant (c) étant choisi dans le groupe constitué par les polyéthers et leurs copolymères.

**2.** Procédé selon la revendication 1, dans lequel on contrôle la sélectivité de l'absorption du sulfure d'hydrogène par rapport au $CO_2$ en ajoutant moins de 5 % en poids, plus préférentiellement moins de 1 % en poids, encore plus préférentiellement moins de 0,3 % en poids, d'un composé viscosifiant à la solution absorbante de manière à augmenter la viscosité dynamique de la solution absorbante d'au moins 25 %, de préférence d'au moins 50 %, plus préférentiellement d'au moins 80 %, par rapport à une même solution absorbante sans ledit composé viscosifiant.

**3.** Procédé selon l'une quelconque des revendications 1 et 2, dans lequel ledit composé viscosifiant est un polyéthylèneglycol.

**4.** Procédé selon l'une quelconque des revendications précédentes, dans lequel ledit composé azoté est choisi dans le groupe constitué par:

- la méthyldiéthanolamine
- la triéthanolamine;
- la diéthylmonoéthanolamine;
- la diméthylmonoéthanolamine;
- l'éthyldiéthanolamine.

**5.** Procédé selon l'une quelconque des revendications précédentes, dans lequel la solution absorbante comprend entre 10 % et 90 % en poids dudit au moins un composé azoté (b), entre 10 % et 90 % en poids d'eau (a), et entre 0,01 % en poids et 20 % en poids du composé viscosifiant (c).

**6.** Procédé selon l'une quelconque des revendications précédentes, dans lequel la solution absorbante comprend en outre un solvant physique choisi parmi le méthanol et le sulfolane.

**7.** Procédé selon l'une quelconque des revendications précédentes, dans lequel l'étape d'absorption sélective est réalisée à une pression comprise entre 1 bar et 120 bar, et à une température comprise entre 20°C et 100°C.

**8.** Procédé selon l'une quelconque des revendications précédentes, dans lequel, après l'étape d'absorption, on obtient un effluent gazeux appauvri en composés acides et une solution absorbante enrichie en composés acides, et dans lequel on effectue au moins une étape de régénération de la solution absorbante chargée en composés acides.

**9.** Procédé selon la revendication 8, dans lequel l'étape de régénération est réalisée à une pression comprise entre 1 bar et 10 bar et une température comprise entre 100°C et 180°C.

**10.** Procédé selon l'une quelconque des revendications précédentes, dans lequel l'effluent gazeux est choisi parmi le gaz naturel, les gaz de synthèse, les gaz de raffinerie, les gaz acides issus d'une unité aux aminés, les gaz issus d'une unité de réduction en queue du procédé Claus, les gaz de fermentation de biomasse, les gaz de cimenterie.

**11.** Procédé selon l'une quelconque des revendications précédentes, dans lequel l'effluent gazeux est du gaz naturel ou un gaz de synthèse.

**Patentansprüche**

**1.** Verfahren zur selektiven Beseitigung von Schwefelwasserstoff, der in einem gasförmigen Abstrom, umfassend $CO_2$, enthalten ist, bei dem ein Schritt der selektiven Absorption des Schwefelwasserstoffs in Bezug auf das $CO_2$ durchgeführt wird, wobei der Abstrom mit einer absorbierenden Lösung in Kontakt gebracht wird, umfassend (a) Wasser und (b) mindestens eine Stickstoffverbindung, wobei die Verbindung mindestens eine tertiäre Aminfunktion und eine gehinderte sekundäre Aminfunktion umfasst, umfassend mindestens einen quaternären Kohlenstoff bei Alpha des Stickstoffs oder zwei tertiäre Kohlenstoffe an Position $\alpha$ und $\alpha'$ des Stickstoffs, und bei dem die Selektivität der Absorption des Schwefelwasserstoffs in Bezug auf das $CO_2$ kontrolliert wird, wobei eine Menge gleich weniger als 20 Gew.-% der absorbierenden Lösung einer viskosifizierenden Verbindung (c) zu der absorbierenden Lösung hinzugefügt wird, um die dynamische Viskosität der absorbierenden Lösung um mindestens 25 % im Vergleich mit einer selben absorbierenden Lösung ohne die viskosifizierende Verbindung zu erhöhen, wobei die Menge der viskosifizierenden Verbindung (c) eingestellt ist, um die gewünschte Selektivität zu erhalten, und wobei die viskosifizierende Verbindung (c) in der Gruppe ausgewählt ist, die von den Polyethern und ihren Copolymeren gebildet ist.

**2.** Verfahren nach Anspruch 1, bei dem die Selektivität der Absorption des Schwefelwasserstoffs in Bezug auf das $CO_2$ kontrolliert wird, wobei weniger als 5 Gew.-%, bevorzugter weniger als 1 Gew.-%, noch bevorzugter weniger als 0,3 Gew.-% einer viskosifizierenden Verbindung zu der absorbierenden Lösung hinzugefügt werden, um die dynamische Viskosität der absorbierenden Lösung um mindestens 25 %, vorzugsweise um mindestens 50 %, bevorzugter um mindestens 80 % im Vergleich mit einer selben ohne die viskosifizierende Verbindung zu erhöhen.

**3.** Verfahren nach einem der Ansprüche 1 und 2, bei dem die viskosifizierende Verbindung ein Polyethylenglykol ist.

**4.** Verfahren nach einem der vorhergehenden Ansprüche, bei dem die Stickstoffverbindung in der Gruppe ausgewählt ist, umfassend:

- Methyldiethanolamin
- Triethanolamin
- Diethylmonoethanolamin
- Dimethylmonoethanolamin
- Ethyldiethanolamin.

**5.** Verfahren nach einem der vorhergehenden Ansprüche, bei dem die absorbierende Lösung zwischen 10 und 90 Gew.-% der mindestens einen Stickstoffverbindung (b), zwischen 10 und 90 Gew.-% Wasser (a) und zwischen 0,01 und 20 Gew.-% der viskosifizierenden Verbindung (c) umfasst.

**6.** Verfahren nach einem der vorhergehenden Ansprüche, bei dem die absorbierende Lösung ferner ein physikalisches Lösungsmittel umfasst, das unter Methanol und Sulfolan ausgewählt ist.

**7.** Verfahren nach einem der vorhergehenden Ansprüche, bei dem der Schritt der selektiven Absorption bei einem Druck zwischen 1 bar und 120 bar und bei einer Temperatur zwischen 20°C und 100 °C durchgeführt wird.

**8.** Verfahren nach einem der vorhergehenden Ansprüche, bei dem nach dem Absorptionsschritt ein gasförmiger Abstrom, der arm an sauren Verbindungen ist, und eine absorbierende Lösung, die mit sauren Verbindungen angereichert ist, erhalten werden, und bei dem mindestens ein Schritt der Regeneration der mit sauren Verbindungen angereicherten absorbierenden Lösung durchgeführt wird.

**9.** Verfahren nach Anspruch 8, bei dem der Regenerationsschritt bei einem Druck zwischen 1 bar und 10 bar und einer Temperatur zwischen 100 °C und 180 °C durchgeführt wird.

**10.** Verfahren nach einem der vorhergehenden Ansprüche, bei dem der gasförmige Abstrom unter Erdgas, Synthesegas, den Raffineriegasen, den sauren Gasen aus einer Amineinheit, den Gasen aus einer Reduktionseinheit am Ende des Claus-Verfahrens, den Biomasse-Fermentierungsgasen, den Gasen aus Zementwerken ausgewählt ist.

**11.** Verfahren nach einem der vorhergehenden Ansprüche, bei dem der gasförmige Abstrom Erdgas oder Synthesegas ist.


**Claims**

**1.** A method of selectively removing hydrogen sulfide contained in a gaseous effluent comprising $CO_2$, wherein a stage of selective absorption of the hydrogen sulfide in relation to the $CO_2$ is carried out by contacting said effluent with an absorbent solution comprising (a) water and (b) at least one nitrogen compound, said compound comprising at least one tertiary amine function or one hindered secondary amine function comprising at least one quaternary carbon at nitrogen alpha position or two tertiary carbons at nitrogen $\alpha$ and $\alpha'$ position, and wherein the absorption selectivity of hydrogen sulfide in relation to $CO_2$ is controlled by adding a proportion equal to less than 20 % by weight of absorbent solution of a viscosifying compound (c) to said absorbent solution, in order to increase the dynamic viscosity of the absorbent solution by at least 25 % in relation to the same absorbent solution without said viscosifying compound, said proportion of the viscosifying compound (c) being adjusted so as to obtain the desired absorption selectivity, and said viscosifying compound (c) being selected from the group consisting of polyethers and their copolymers.

**2.** A method as claimed in claim 1, wherein the absorption selectivity of hydrogen sulfide in relation to $CO_2$ is controlled

by adding less than 5 wt.%, more preferably less than 1 wt.% and still more preferably less than 0.3 wt.% of a viscosifying compound to the absorbent solution so as to increase the dynamic viscosity of the absorbent solution by at least 25 %, preferably at least 50 % and more preferably at least 80 %, in relation to the same absorbent solution without said viscosifying compound.

3. A method as claimed in any one of claim 1 and 2, wherein said viscosifying compound is a polyethylene glycol.

4. A method as claimed in any one of the previous claims, wherein said nitrogen compound is selected from the group consisting of:

- methyldiethanolamine,
- triethanolamine,
- diethylmonoethanolamine,
- dimethylmonoethanolamine,
- ethyldiethanolamine.

5. A method as claimed in any one of the previous claims, wherein the absorbent solution comprises between 10 and 90 wt.% of said at least one nitrogen compound (b), between 10 and 90 wt.% water (a), and between 0.01 and 20 wt.% of viscosifying compound (c).

6. A method as claimed in any one of the previous claims, wherein the absorbent solution also comprises a physical solvent selected from among methanol and sulfolane.

7. A method as claimed in any one of the previous claims, wherein the selective absorption stage is carried out at a pressure ranging between 1 bar and 120 bars, and at a temperature ranging between 20°C and 100°C.

8. A method as claimed in any one of the previous claims wherein, after the absorption stage, a gaseous effluent depleted in acid compounds and an absorbent solution enriched in acid compounds are obtained, and at least one stage of regenerating the absorbent solution laden with acid compounds is performed.

9. A method as claimed in claim 8, wherein the regeneration stage is carried out at a pressure ranging between 1 bar and 10 bars, and at a temperature ranging between 100°C and 180°C.

10. A method as claimed in any one of the previous claims, wherein the gaseous effluent can be selected from among natural gas, syngas, refinery gas, acid gas from an amine unit, Claus tail gas, biomass fermentation gas, cement plant gas.

11. A method as claimed in any one of the previous claims, wherein the gaseous effluent is natural gas or a syngas.

FIG. 1

## RÉFÉRENCES CITÉES DANS LA DESCRIPTION

**Documents brevets cités dans la description**

- US 6852144 B
- US 4405581 A
- US 4405582 A
- US 4405583 A
- US 4405811 A
- US 4483833 A
- FR 2313968 B1
- EP 134948 A2
- FR 2485945
- US 4085192 A
- FR 2318968 B1
- EP 134948 A
- FR 2318968

**Littérature non-brevet citée dans la description**

- **FRAZIER ; KOHL.** *Ind. and Eng. Chem.,* 1950, vol. 42, 2288
- **VAN DEN BRAND.** *Sulphur 2002,* 27 Octobre 2002
- **HUFFMASTER ; NASIR.** Proceedings of the 74th GPA Annual Convention. *Gas Treating and Sulfur Recovery,* 1995, 133
- **LAMMERS et al.** *The Chemical Engineering Journal,* 1995, vol. 60, 123-129
- **VORBER.** *Gas Processors Association 27ème conférence,* 22 Septembre 2010
- **SATO et al.** *Polym. J.,* 1984, vol. 16 (5), 423